Europäisches Patentamt

(19) **European Patent Office**

Office européen des brevets

(11) Publication number: **0 014 289**
**B1**

(12) **EUROPEAN PATENT SPECIFICATION**

(45) Date of publication of patent specification: **30.05.84**

(51) Int. Cl.³: **B 03 B 9/06**

(21) Application number: **79302859.8**

(22) Date of filing: **12.12.79**

(54) Method for separating plastics and metal from metallized plastic.

(30) Priority: **13.12.78 US 968943**
**10.09.79 US 73768**

(43) Date of publication of application:
**20.08.80 Bulletin 80/17**

(45) Publication of the grant of the patent:
**30.05.84 Bulletin 84/22**

(84) Designated Contracting States:
**DE FR GB IT NL**

(56) References cited:
**DE-A-2 208 926**
**FR-A-2 131 374**
**US-A-2 879 005**
**US-A-2 971 703**
**US-A-3 885 744**
**US-A-3 973 736**
**US-A-4 025 990**
**US-A-4 113 185**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**The American Road**
**Dearborn, MI 48121 (US)**
(84) **IT NL**

(72) Inventor: **Anklin, Richard Thomas**
**2545 Coachlite Drive**
**Tecumseh, Michigan 49286 (US)**
Inventor: **Gall, Richard Lee**
**7150 Chamberlin**
**Dexter, Michigan 48130 (US)**
Inventor: **Mende, William Benedict**
**12366 Matthews Highway**
**Clinton, Michigan 49236 (US)**

Courier Press, Leamington Spa, England.

EP 0 014 289 B1

(74) Representative: **Messulam, Alec Moses et al**
**A. Messulam & Co. 24 Broadway**
**Leigh on Sea Essex SS9 1BN (GB)**

## Description

This invention relates to a method for the separation of plastics and metal from metallized plastics.

Reclamation of materials from spent or otherwise normally discarded articles has obvious potential for financial as well as environmental benefit. Reclamation of plastic or metal from articles consisting of metal or plastic alone may not require a specialized approach. On the other hand, reclamation of metal, plastic or both from articles comprising intimately combined metal and plastic presents liberation and separation considerations. Several approaches have been proposed. See, for example, U.S. Patents 4,025,990; 4,020,992; 3,995,816; 3,990,641; 3,718,284; 3,666,185; 3,643,873; 3,527,414; 2,879,005; and 1,978,204.

Generally, however, recovery of metallized plastic, such as chrome plated plastic, has not received, as far as known, particular attention. For example, the above patents typically provide recovery processes for scrap or other normally discarded articles in which there is "embedded or occluded" metal (e.g. U.S. Patent 2,879,005), or in which the metal is not expected to tenaciously adhere to the plastic (e.g. U.S. Patent 4,020,992 relates to bottle caps). (See, also, U.S. Patents 1,978,204; 3,718,284; 3,995,816; and 4,025,990 which show tire recovery; and U.S. Patents 3,527,414 and 3,990,641 which show wire recovery). Moreover, in other instances focus is primarily on recovery of metal, e.g. U.S. Patents 3,885,744 and 3,443,873.

Reclamation of plastic from metallized plastic presents especially difficult liberation as well as separation problems. For example, metallized plastic is designed to resist breaking away of metal from plastic. To this end, prior to metallization such as plating, the plastic may be etched, abraded or otherwise treated to adhere tenaciously metal to plastic.

Even after liberation of metal from plastic, however, separation can be further complicated by additional aspects of certain metallized plastic. For example, the metal may comprise non-ferrous or essentially non-ferrous metal and even contain non- or substantially non-ferromagnetic metal (e.g. copper) layers. Still further, even low levels of minute particles can render reclaimed plastic unacceptable for return to higher uses, e.g., plating grade thermoplastic. Still other difficulties (e.g. handling of dust generation) that have been overcome in provision of the industrially suitable and economically valuable process of this invention will be more apparent from the following disclosure.

According to the present invention, there is provided a method of recovering plastics material from waste plastics material containing metal, the method comprising exposing the pieces of plastics material to a temperature sufficiently low to make the plastics material brittle, impacting the cooled pieces to shatter them to form a plastics and metal dispersion, and withdrawing from the dispersion a sufficient amount of metal to provide a reusable plastics material, the withdrawal comprising subjecting at least a portion of the dispersion to magnetic separation. These features are known from US—A—2 879 005. The invention is characterised in that the waste plastics material has a tenaciously adherent metal coating, that the waste material is cooled to a temperature below −87°C, the latter temperature being sufficiently below the glass transition temperature to maintain the plastics material brittle during milling and to cause separation of the metal coating from the plastics material by differential shrinkage, and in that prior to magnetic separation, the plastics and metal dispersion is graded according to particle size and only the smallest particles of the powder dispersion are subjected to magnetic separation.

In a preferred embodiment, this invention permits rejuvenation (i.e., return to functionally original state) of plastic from metallized plastic such as chrome plated plastic.

Cryogenic comminution of prepared metallized pieces liberates metal from enough plastic to permit economically effective withdrawal (preferably by steps comprising certain magnetic and particle separations) of nearly all of the metal therefrom. This withdrawal of metal occurs even though the metal may be essentially non-ferrous and may include non-ferromagnetic metal (e.g. copper) layers. Preferably, a purification step (e.g. filtration of molten polymer) provides plastic that may be reused again in metallizing operations. Alternatively, a non-magnetic fraction obtained by magnetic separation after cryogenic comminution may be used for general-purpose applications.

The liberation of metal from metallized plastic that permits efficient metal separation in accordance with the invention occurs optimally under special conditions. More particularly, there is first an exposure of metallized plastic pieces of desirably certain size to a temperature sufficiently below the glass transition temperature of the plastic to maintain its brittleness during milling. Additionally, this exposure differentially shrinks metal and plastic. Impact of the cooled pieces in a mill then shatters them, pulverizes the plastic, and thereby liberates plastic from metal.

It has been found that this cryogenic comminution and consequent liberation of metal from plastic has an optimal occurrence when impact of the cooled metallized pieces is against intermeshing impacting pegs in a centrifugal rotary impact mill operating at high speeds. More particularly and preferably, the intermeshing impacting pegs are rectilinear and arranged so as to receive a substantial portion of the pieces at least initially at an angle that deflects them at other pegs. Thus, as the pieces fly out from the centre of the rotary impact mill, they contact a plurality of impact pegs, are shattered and the plastic is pulverized. The metal then exists as at least substantially metal particles dispersed in plastic powder.

Nearly all of the metal can then be removed from the pulverized plastic by withdrawal of the at least substantially metal particles therefrom. Recycle of larger particles that are obtained by particle size separation enables further pulverization and consequent liberation of plastic and metal. Advantageously, the amount of particles thus recycled for further pulverization can be as low as 10% (or even less) by weight of the particles subjected to particle size separation.

This invention permits reclamation of plastic from metallized plastic even when the metal is essentially non-ferrous and even though it may comprise non-ferromagnetic metal (e.g. copper).

The process of this invention as hereinafter described is especially suitable for reclamation and rejuvenation of thermoplastic polymer. For example, ABS (acrylonitrile-butadiene-styrene polymer) may be reclaimed or rejuvenated from metallized, e.g. plated, ABS. Other thermoplastic polymers also can be reclaimed or rejuvenated. Examples of such polymers include aryl polymers, such as polyphenyleneoxide and polyolefins, such as polypropylene. Further, the thermoplastic polymers may be polymer blends as well as blends with inorganic modifiers, e.g. fillers such as calcium carbonate. Other plastics that are crosslinked in varying degrees and metallized also may be substantially separated from metal in accordance with the invention. Moreover, this invention permits reclamation of metal by product that can provide further economic benefit.

This invention is especially suitable for reclamation and rejuvenation of metallized plastic wherein the coating on the plastic comprises chrome plate. As is known, such chrome plate may, for example, comprise one or more layers of nickel and copper with a final relatively thin layer of chromium.

Plated ABS, for example is used commercially as automotive plastic in decorative mouldings, e.g. grills, headlight housings, trim strips and the like. These plated plastics may comprise nickel, copper and chromium wherein the nickel and copper are at about equal by weight and the chromium comprises much less. Thus, for example, in aqueous plating a typical plating grade ABS moulded object may be first etched (high or low chromic acid). Thereafter it is plated to provide a coating with, for example, metal thicknesses ranging about: strike nickel (0.5—12.5 $\mu$m), copper (2.5—25 $\mu$m), semi bright nickel (2.5—25 $\mu$m), bright nickel (1.25—25 $\mu$m), and a chromium (0.05—1.25 $\mu$m). Moreover, other variations are well known, e.g., use of strike copper rather than strike nickel as well as use of bronzes. Plating to plastic ratios may vary widely but normally comprise between about 1—25 parts by weight metal per hundred parts by weight plastic.

A preferred embodiment of the invention will now be described, by way of example only, with reference to the accompanying drawings, in which:—

Figure 1 illustrates schematically a preferred processing sequence including equipment therefore in which rejuvenation of plastic from large size metallized scrap, e.g. automotive grills, occurs.

Figures 2, 3, 4, 5 and 6 illustrate graphically particle size distributions from various stages of the process.

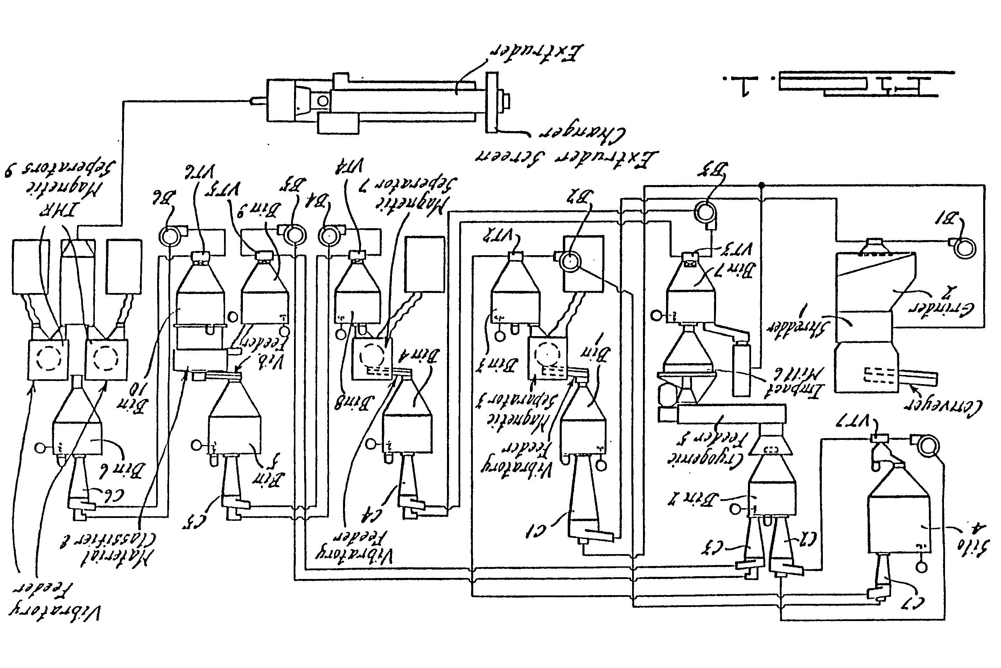

Referring to Figure 1, there is shown a preferred embodiment of this invention. It is a generally closed system for reclamation and rejuvenation of thermoplastic polymer from large size plated scrap, e.g. automotive grills and headlamp housings. The system is equipped with solenoid valves for control of material flow through pneumatic lines from one stage to another. The material bins are equipped with level detectors. The pneumatic feed lines are equipped with blowers (B1—B7), venturi loaders (VT1—VT7) and cyclones (C1—C7) that aid in efficient material flow.

In a preparatory stage workpieces to be processed in accordance with this system are conveyed as in the drawing to Shredder 1/Grinder 2 that comminutes them into pieces suitable for cryogenic grinding. Shredder 1 is particularly advantageous to shred large articles of scrap such as grills so as to reduce wear on Grinder 2. The ground pieces obtained from Grinder 2 preferably are such that at least about 80% by weight (absent flaked off metal) pass through a sieve having an opening of about 10 millimeters. Larger ground pieces e.g. those retained on sieves with openings about 15 millimeters, may require more recycling due to insufficient pulverization during cryogenic comminution. The need for recycling is dependent upon factors such as cooling rate, other dimensions of pieces, amount of metal coating relative to plastic, nature of plastic and metal, impact mill design and peg dimensions and distribution, etc.

For chrome plated thermoplastic in which the plastic comprises, for example, ABS and the metal comprises layered nickel, copper, and chrome, the scrap is preferably ground or otherwise prepared so that at least about 50% by weight of the pieces (absent flaked off metal) passes through a mesh having an opening of about 10 (more preferably 5) millimeters. Preferably, at least about 80% by weight additionally passes through a mesh about 15 millimeters.

From the Shredder 1/Grinder 2, the ground pieces are subjected to a magnetic separation. To this end, they are pneumatically conveyed first to a vibratory feeder for Magnetic Separator 3. Magnetic Separator 3 is a permanent drum magnet and, advantageously, removed magnetically susceptable metal that may be flaked off during the grinding operation. It is desirable, however, that the Magnetic Separator 3 be controlled to remove only highly magnetically susceptible material to avoid excessive processing losses of plastic. This is accomplished, for example, by wrapping the drum with rubber coating of preferably less than about 2.5 cm thick, e.g. 0.65 cm. The drum speed is preferably about 20—60 such as about 40 rpm. The magnetic portion from Magnetic Separator 3 may further be reprocessed, if desired, but comprises nearly all metal.

The non-magnetic effluent of Magnetic Separator 3 is then preferably pneumatically conveyed to Silo 4 for storage and to permit regulation of material flow through the rest of the process.

From Silo 4, pieces of metallized plastic (i.e., pieces remaining after grinding and magnetic withdrawal of metal by Magnetic Separator 3) are pneumatically conveyed to Cryogenic Feeder 5. Cryogenic Feeder 5 permits their contact with a temperature substantially below the glass transition temperature of the plastic. The precise temperature chosen will vary depending on factors such as thickness and type of thermoplastic; thickness and type of metal; impact mill design and speed; and economics chosen, e.g. amount of recycle of insufficiently pulverized pieces tolerated. The cooling is readily accomplished by conventional means, e.g. by exposure to liquid nitrogen or other fluid cryogenic substance.

Advantageously, the cryogenic fluid may be conserved by intermittant introduction to the Cryogenic Feeder 5. Thus, a temperature sensor in Cryogenic Feeder 5 may be used to activate solenoids that admit, for example, liquid nitrogen to maintain desired temperature range.

Normally, the amount of liquid nitrogen or other cryogenic fluid used is by weight well below about 2 times the amount of pieces processed, preferably below about equal parts by weight. By intermittant introduction of liquid nitrogen or other such fluid into Cryogenic Feeder 5, with appropriate temperature sensing feedback, a steady state amount of nitrogen may be as low as about 0.2 times by weight the amount of pieces being processed at desirable feed rates, e.g. 500 kg/h or more. A typical range is between about 0.2—0.6 nitrogen parts per one part metallized plastic pieces by weight. The amount used varies to some extent, for example, on feed rate of metallized pieces, on ambient climatic conditions and on length of equipment operation.

Pieces of metallized plastic (which preferably have been previously ground and subjected to magnetic separation as indicated above) are desirably augered through Cryogenic Feeder 5 by a screw that has cutout flights to promote contact with the cryogenic fluid.

The cryogenic fluid, as mentioned, cools the pieces of metallized plastic as they pass through Cryogenic Feeder 5 into Impact Mill 6. When temperature sensors within Cryogenic Feeder 5 report temperature elevation above a certain level, (e.g. −101°C) solenoid valves open and admit cryogenic fluid, preferably liquid nitrogen, into Cryogenic Feeder 5.

At least one solenoid preferably permits admission of liquid nitrogen at the end of Cryogenic Feeder 5 nearest Impact Mill 6. Another solenoid preferably permits admission of liquid nitrogen into the closed chute between Cryogenic Feeder 5 and Impact Mill 6. Thus, the cryogenic fluid travels with the cooled pieces of metallized plastic into Impact Mill 6. This cryogenic fluid cools Impact Mill 6 during operation.

When liquid nitrogen is employed as the cryogenic fluid, its temperature (in the liquid state) ranges at most up to about −195°C. Accordingly, it vapourizes upon contact with warmer surfaces within Cryogenic Feeder 5, Impact Mill 6 and the chute therebetween. Flow of the pieces of metallized plastic along with rotation of Impact Mill 6 draws the vapour through Impact Mill 6 and into Bin 7.

Venting of Bin 7 relieves pressure of the expanding vapour passing through Impact Mill 6. Venting of Bin 7 to Shredder 1/Grinder 2 (as shown in Figure 1) additionally aids grinding therein. Moreover, venting of Bin 7 enables better control of pneumatic transport of materials through the system.

Impact of the pieces of Impact Mill 6 liberates metal from plastic. As can be understood, this liberation stage is an important feature. It has been found that centrifugal impacting at high speeds (e.g. over 2000 RPM such as 2500—3500 RPM) using intermeshing rotor and stator optimally accomplishes such liberation with particle sizes as previously mentioned. In addition to shattering the pieces of metallized plastic, pulverization of the plastic into a powder thus occurs. Preferably, at least about 80% by weight of the plastic passes through a 3 mesh screen, more preferably, for example, chrome plated ABS an 8 mesh screen. Especially desirable liberation of metal occurs when at least about 80% by weight of the plastic passes through a 12 mesh screen.

The powder (with at least substantially metal particles dispersed therein) then can be conveyed pneumatically to Magnetic Separator 7 that is fed by a vibratory feeder. Magnetic Separator 7 can be the same as Magnetic Separator 3 except preferably without added rubber roll. At this stage the non-magnetic fraction pneumatically transferred from Magnetic Separator 7 should desirably have about 95% by weight or greater, e.g. 98% by weight of the metal removed. An exposure to a magnetic field in a range of between about 1000—2500 gauss is preferable for Magnetic Separator 7.

The non-magnetic fraction is pneumatically conveyed to a vibratory feeder for Material Classifier 8. Material Classifier 8 collects the smallest particles of Separators 9. Material Classifier 8 separates out larger particles e.g. larger than about 3, more preferably 10 to 20 mesh (normally less than 25% by weight of all particles, preferably less than 10% by weight). The large particles desirably are pneumatically conveyed back to Cryogenic Feeder 5 for reprocessing. The particles screened out by Material Classifier 8 for recycle are most preferably those on about a 12 mesh or greater screen.

Magnetic Separators 9 provide a high intensity magnetic field through which the powder drops. Adjustment of the material splitters accomplishes removal of remaining magnetically susceptable materials. The splitters which are conventionally included with such separators, allow variance in the amount of powder separated magnetically. Magnetic Separators 9 reduce the amount of metal in the powder desirably to below 2% by weight and in preferred operation to less than 1% by weight, e.g., 0.8% by weight of the product.

The above described process permits preparation of general purpose thermoplastic polymer that may be used alone or, blended with other polymer, if desired to even further reduce impurities. In operation of the preferred process of this invention, however, the non-magnetic fraction from Magnetic Separators 9 is passed to Extruder 10 wherein it is made molten and passed through one or more screens (e.g. 20—200 mesh). The screens continuously change and filter out residual impurities. After such filtration, the thermoplastic polymer may be used as plating grade thermoplastic, without further blending, if desired. The screening during extrusion may be omitted in whole or, in part to yield thermoplastic polymer suitable as general moulding grade thermoplastic, especially if blended with other such material.

The following examples include an illustration of this invention in certain of its preferred aspects and are not intended as necessarily limiting its scope.

Example 1

This example illustrates reclamation and rejuvenation of plastic from scrap consisting of chrome plated automotive grills, chrome plated headlamp housings, and other similar scrap. The process apparatus is in accordance with the Figure 1. Equipment and its operation is as follows:

1. Shredder 1 is Model 3CAX-3048-V available from Blower Application Co. The Shredder operates at maximum RPM.
2. Grinder 2 is model 2437 Series 5000 Granulator available from Entroleter Corporation. Grinder 2 operates at maximum RPM.
3. Magnetic Separator 3 is Model HFCC Permanent Magnetic Drum available from Eriez Magnetics. It has a 15×24 inch roll with one quarter inch rubber wrap. Magnetic Separator 3 operates at about 40 RPM.
4. Cryogenic Feeder 5 is Cryogrind Model 6C Screw Conveyor available from Air Products and Chemicals, Inc. Nitrogen weight feed rate averages between about 0.3—0.6 per weight of pieces conveyed. Temperature in Cryogenic Feeder 5 ranges between about $-128°C \pm 28°C$ during continuous operation.
5. Impact Mill 6 is Series 30 Heavy Duty Adjustable Impact Mill utilizing a M3S2 Rotor design available from Entoleter Corporation. The mill has intermeshing rotor and stator pegs. The pegs are rectilinear of the following dimensions: Rotor 1.27 cm L. by 1.27 cm W. by 3.8 cm H; Stator 0.64 cm L. by 1.27 cm W. by 3.8 cm H. The pegs are arranged so that two opposing corners or each peg lie on a straight line drawn through the centre of the mill. (For further information on mills as Impact Mill 6, reference may be made to Centrimill Bulletin CM-100/2 of Entroleter Corporation.) Impact Mill 6 operates at 3000 RPM.
6. Magnetic Separator 7 is a model like Magnetic Separator 3 except it does not have rubber wrap. Magnetic Separator 7 operates at 40 RPM.
7. Material Classifier is Model C-362-V-36" diameter available from Eriez Magnetics. Material Classifier 8 operates such that particles that retained on a 12 mesh return to Cryogrind Feeder 5.
8. Magnetic Separators 9 are 800—1200 watt induced Magnetic Roll Separators available from Eriez Magnetics.
9. Extruder 10 is a six inch (15.24 cm) single screw extruder with continuous screen changer. The screen changer is an 8 inch Berlyn screen changer adapted to the six inch (15.24 cm) extruder. The screen continuously passes through the extruding polymer. Cooling at the periphery allows the polymer to act as a seal. The screen retains sufficient heat, however, to slide through the extruding polymer. The screens are 20 and 60 mesh.
10. The venturis are models available from Process Control Corporation with adjustable throat. Each uses a centrifugal fan source. As seen by the drawing, a cyclone at the discharge separates material from an air stream which is ducted back to close the system.
11. Vibrator Feeders are models available from Eriez Magnetics.

The chrome plated scrap comprises about 15 parts by weight metal for each 100 parts by weight ABS. The chrome plate comprises strike nickel (2.5 $\mu$m); copper (17.8 $\mu$m); semi-bright nickel (12.5 $\mu$m); bright nickel (7.5 $\mu$m); and chromium (0.25 $\mu$m). The ABS grills and other pieces are chrome plated in an automotive automated chrome plating operation and constitute scrap. The scrap weights vary mostly from 0.2 to 3 kg.

The system is electrically connected to operate automatically. It is self purging. The system is turned on with following sequence. Nitrogen exhaust fan starts for ventilation. The nitrogen start is activated manually. This energizes nitrogen supply solenoids and temperature controllers. This allows nitrogen to be fed to Cryogenic Feeder 5 solenoids. Cryogenic Feeder 5 and Impact Mill 6 solenoids are activated allowing nitrogen to enter Cryogenic Feeder 5. Ready light comes on when temperature drops below 37.8°C. The automated sequence button is turned on manually after activation of ready light. This energizes all rotary bin level switches, bin level lights, impact mill oil mist, heater for Impact Mill 6 starter and Impact Mill 6 starter motor. The starter motor energizes Magnetic Separators 9. After 30 second delay vibratory feeder to Separator 9 starts along with the blower below Bin 10. This starts Material Classifier 8. After 10 second delay, the vibratory feeder to Classifier 8 starts. This starts the blower below Bin 4. This starts Magnetic Separator 7. This starts the fan below Bin 7. This starts Cryofeeder 5 control start and the blower below Bin 9. This starts the blower below Silo 4. This starts the blower below Bin 3. This starts Magnetic Separator 3. This starts the blower below Grinder 2. This starts Shredder 1 and Grinder 2. This starts after 90 seconds conveyance of scrap to system. Material flow into Shredder 1 is at between about 900—1000 kg/h.

Particle samples are taken from various stages in the process after continuous operation. Sieve analysis shows:

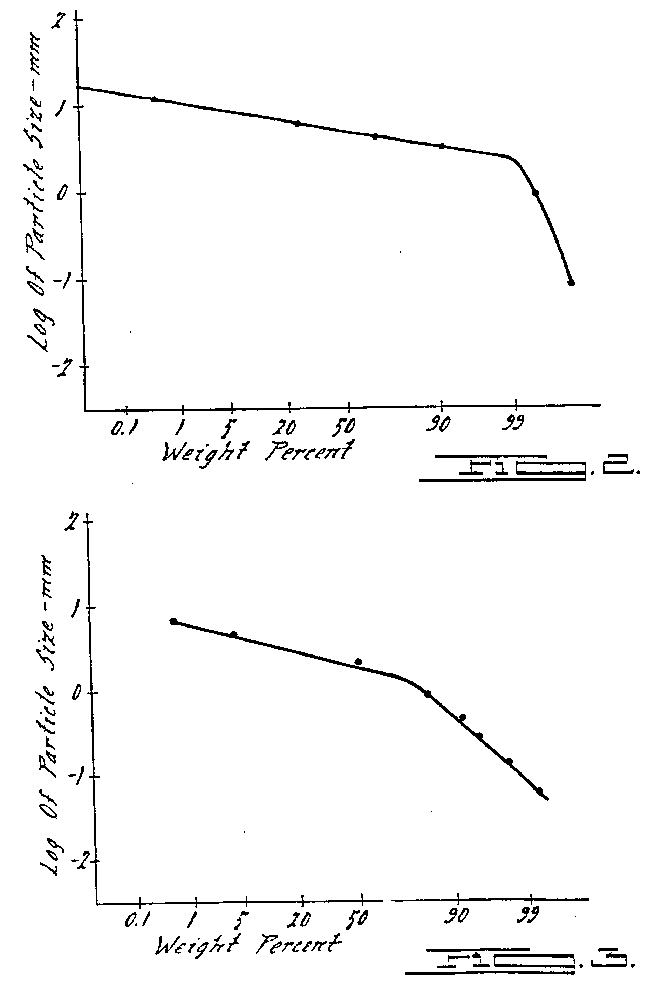

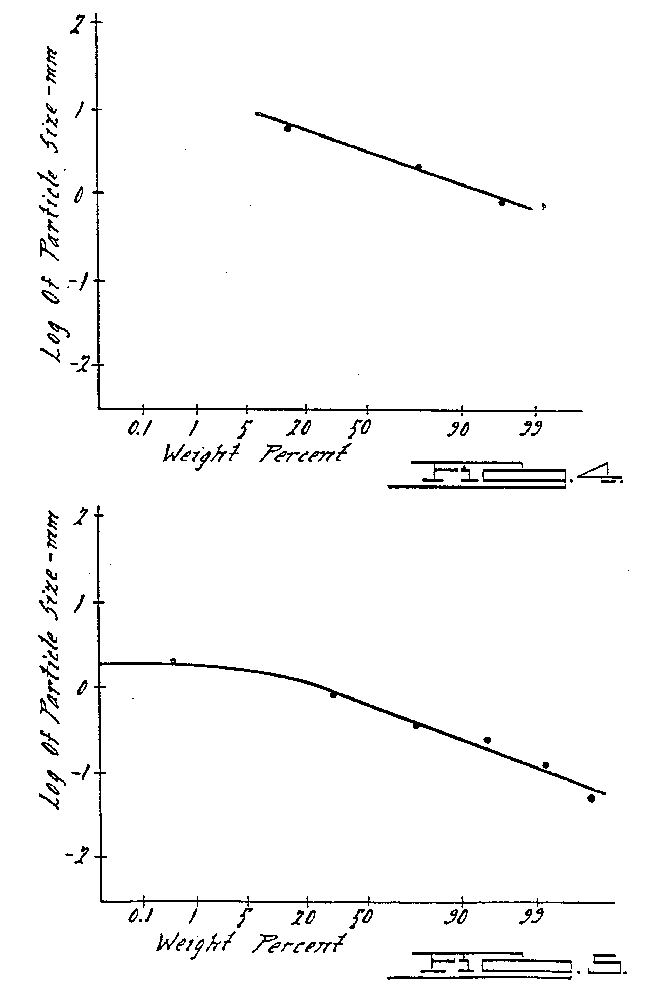

1. The Silo has particles that have an average particle size of about 5 mm. (i.e. 50% by weight would pass through a 5 mm mesh screen.) 80% by weight of the particles are between 3—8 mm. Figure 2 shows their particle distribution as weight percent against log of particle size.
2. Magnetic Separators 7 draw off metal particles to have an average particle size of about 1.8 millimeters. (i.e. half by weight would pass through a screen with 1.8 millimeter opening.) About 90% by weight are less than about 3.5 millimeters. Since the metal particles are not spherical and, moreover, easily deformed, the above are approximations. Figure 3 shows their particle distribution as weight percent against log of particle size.

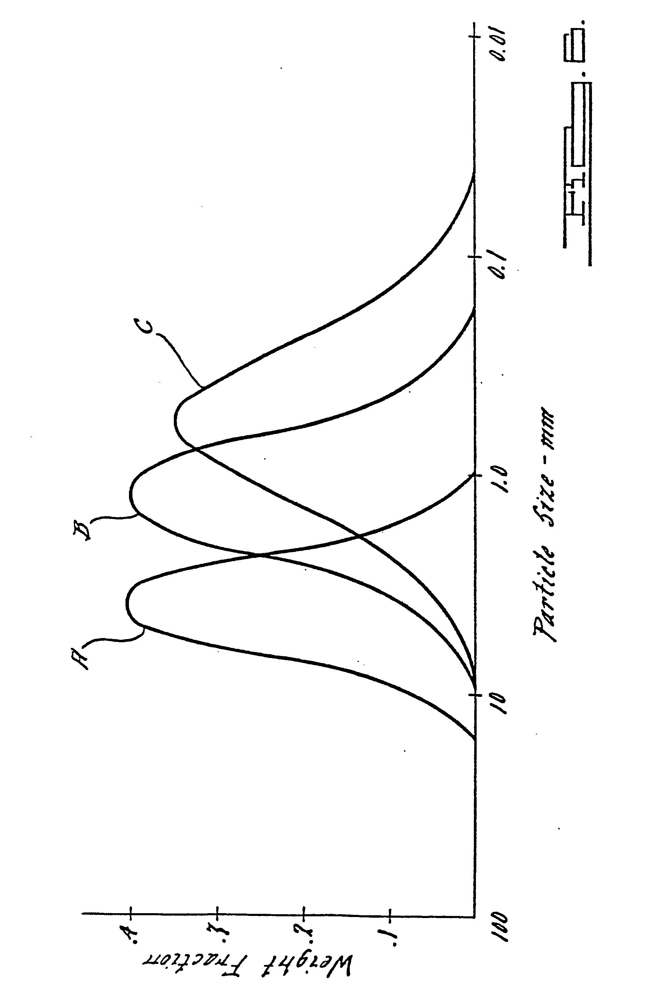

3. Particles returned by Material Classifier 8 have an average size of about 3.2 millimeters. 90% are larger than 1.2 millimeters. Figure 4 shows their particle size distribution as weight present against particle size.
4. The non-magnetic fraction from Magnetic Separators 9 have an average particle size of about 0.6 millimeters. 90% by weight passes through a 16 mesh screen. Figure 5 shows their particle size distribution as weight percent against log of particle size. Figure 6 shows an approximation of particle size versus weight fraction for (1) metallized plastic before Impact Mill 6 (curve A); (2) metal after Impact Mill 6 (curve B); and (3) ABS after Impact Mill 6 (curve C).

Analysis by a sample from the non-magnetic fraction from Magnetic Separators 9 yields by weight in one case 0.85%±0.1% metal; in another case 1.05%±0.1% metal. After extrusion through continuous screen changer of Extruder 10, results show 0.4%±0.1% metal by weight.

Samples of ABS extrudate from Extruder 10 exhibit properties shown in Table 1.

TABLE 1

| | |
|---|---|
| A. Specific Gravity (ASTM-D-792) | 1.06 |
| B. Tensile Strength 0.5 cm/min (ASTM-D-638) | 42.7MPa |
| C. Flexural Strength 0.127 cm/min Span 5 cm; 0.32 cm bar (ASTM-D-790) | 77.9MPa |
| D. Flexural Modulus 0.05"/min Span 5 cm 0.32 cm bar (ASTM-D-790 | 2715.2MPa |
| E. Notched Izod Impact 1/8" bar (ASTM-D-256) | 0.112J/mm |
| F. Deflection Temperature (ASTM-D-648) | |
| at 4.64 kg/sq cm as rec. | 96°C |
| at 18.56 kg/sq cm as rec. | 90°C |
| G. Rockwell "R" Hardness (ASTM-D-785) | 111 |
| H. Modulus Elasticity in Tension | 2321.4MPa |
| I. Ash by weight | 1.5% |

Other samples are moulded and plated to yield new chrome plated grills. The new chrome plated grills exhibit acceptable properties for use as automotive chrome plated grills.

Example 2

The procedures of Example 1 are followed except the temperatures in Cryogenic Feeder 5 is —115°C±28°C. Results are deemed similar.

Example 3

The procedures of Example 2 are followed except that the pieces entering Cryogenic Feeder 5 are slightly larger on the average, i.e. about 50% by weight would pass through a 7·

mm screen. Results are deemed to be desirable.

Example 4

The procedures of Example 1 are followed except that samples are taken before extrusion through Extruder 10. The samples are blended and conventionally extruded with 50% by weight ABS of general purpose character to form pellets. Properties of samples moulded from the pellets are acceptable for reuse of the blend as general purpose ABS.

Example 5

The procedures of Example 2 are followed except that chrome plated Noryl thermoplastic replace the chrome plated ABS. Results are deemed to be desirable.

Example 6

The procedures of Example 1 are followed except that chrome plated polypropylene replace the pieces of the chrome plated ABS. Results are deemed to be desirable.

**Claims**

1. A method of recovering plastics material from waste plastics material containing metal, the method comprising exposing the pieces of plastics material to a temperature sufficiently low to make the plastics material brittle, impacting the cooled pieces to shatter them to form a plastics and metal dispersion, and withdrawing from the dispersion a sufficient amount of metal to provide a reusable plastics material, the withdrawal comprising subjecting at least a portion of the dispersion to magnetic separation, characterised in that the waste plastics material has a tenaciously adherent metal coating, that the waste material is cooled to a temperature below −87°C, the latter temperature being sufficiently below the glass transition temperature to maintain the plastics material brittle during milling and to cause separation of the metal coating from the plastics material by differential shrinkage, and in that prior to magnetic separation, the plastics and metal dispersion is graded according to particle size and only the smallest particles of the powder dispersion are subjected to magnetic separation.

2. A method in accordance with claim 1, characterised in that the larger particles of the powder dispersion are reprocessed to reduce their size still further.

3. A method in accordance with claim 1 or 2, in which the intensity of magnetic separation is sufficiently high to provide a non-magnetic fraction comprising no more than 1% by weight of metal.

4. A method in accordance with claim 2 or claim 3 wherein said metal coating comprises a layer of non-ferromagnetic metal.

5. A method in accordance with any one of claims 1 to 4 wherein the material from which metal has been withdrawn is melted and the molten material is filtered through one or more screens.

6. A method in accordance with any one of claims 1 to 4 wherein the plastics material comprises a thermoplastic material.

7. A method in accordance with claim 6 wherein said metallized plastics material comprises chrome plated ABS.

8. A method in accordance with any one of claims 1 to 7 wherein the cooled pieces are impacted against rectilinear impacting pegs in a rotary impact mill.

9. A method in accordance with any one of claims 1 to 8 wherein prior to impacting, at least about 50% by weight of said pieces of metallized plastics material can pass through a screen with a 10 mm opening and at least about 80% by weight of said pieces can pass through a 15 millimeter opening.

10. A method in accordance with any one of claims 1 to 9 wherein the plastics material is pulverized so that at least about 80% by weight can pass through an 8 mesh screen.

11. A method in accordance with any one of claims 1 to 9 wherein the metal is withdrawn from the dispersion by magnetically separating the dispersion into a magnetic fraction and a lesser magnetic fraction; withdrawing from said lesser magnetic fraction at least most of the particles that pass through a 10 mesh screen to form a smaller particle fraction; and magnetically separating said smaller particle fraction into a magnetic fraction and a second lesser magnetic fraction, said second lesser magnetic portion containing about 1% by weight of metal or less.

12. A method in accordance with any one of claims 1 to 11 wherein said pieces of metallized plastics material are ground and exposed to a magnetic field to remove magnetic material therefrom prior to cooling.

13. A method in accordance with any one of claims 1 to 12 wherein at least about 50% by weight of said pieces of metallized plastics material can pass through screen with a 5 millimeter opening prior to impacting.

**Patentansprüche**

1. Verfahren zur Rückgewinnung von Kunststoffmaterial aus metallhaltigem Abfallkunststoffmaterial, bei welchem man die Kunststoffmaterialstücke einer so niedrigen Temperatur aussetzt, dass das Kunststoffmaterial versprödet, die gekühlten Stücke aufeinander stossen lässt, um sie unter Bildung einer Kunststoff/Metalldispersion zu zerschlagen, und eine genügende Menge Metall aus der Dispersion entfernt, damit das Kunststoffmaterial wiederverwendbar wird, wobei das Entfernen darin besteht, dass man mindestens einen Teil der Dispersion einer magnetischen Trennung unterzieht, dadurch gekennzeichnet, dass das Abfallkunststoffmaterial einen sehr stark anhaftenden Metallüberzug aufweist, dass das Abfallmaterial auf eine Temperatur unterhalb −87°C abgekühlt wird, welche genügend weit unterhalb dem Glasübergangspunkt liegt, damit das Kunststoffmaterial während der Vermahlung spröde bleibt und unterschiedliche Schrumpfung dazu führt, dass sich der Metallüberzug von dem Kunststoffmaterial ablöst, und dass vor der magnetischen Trennung die Kunststoff/Metalldispersion nach der Teilchengrösse klassiert wird und nur die kleinsten Teilchen der Pulverdispersion der magnetischen Trennung unterzogen werden.

2. Verfahren nach Anspruch 1, dadurch gekennzeichnet, dass die grösseren Teilchen der Pulverdispersion zur weiteren Verringerung ihrer Teilchengrösse nochmals verarbeitet werden.

3. Verfahren nach Anspruch 1 oder 2, worin die Intensität der magnetischen Trennung genügend hoch ist, um eine nicht mehr als 1 Gew.-% Metall enthaltende unmagnetische Fraktion zu ergeben.

4. Verfahren nach Anspruch 2 oder 3, worin dieser Metallüberzug eine Schicht nicht-ferromagnetischen Metalls enthält.

5. Verfahren nach einem der Ansprüche 1 bis 4, worin das Material, aus dem das Metall entfernt wurde, geschmolzen und das geschmolzene Material durch ein oder mehrere Siebe filtriert wird.

6. Verfahren nach einem der Ansprüche 1 bis 4, worin das Kunststoffmaterial aus einem thermoplastischen Kunststoff besteht.

7. Verfahren nach Anspruch 6, worin dieses metallisierte Kunststoffmaterial verchromtes ABS enthält.

8. Verfahren nach einem der Ansprüche 1 bis 7, worin die abgekühlten Stücke auf geradlinige Prallstifte in einer rotierenden Feinprallmühle aufschlagen.

9. Verfahren nach einem der Ansprüche 1 bis 8, worin vor dem Aufprallen mindestens etwa 50 Gew.-% dieser Stücke aus metallisiertem Kunststoffmaterial durch ein Sieb mit 10 mm-Oeffnung und mindestens etwa 80 Gew.-% dieser Stücke durch eine 15 Millimeter-Oeffnung passieren können.

10. Verfahren nach einem der Ansprüche 1 bis 9, worin das Kunststoffmaterial so weit pulverisiert wird, dass mindestens etwa 80 Gew.-% durch ein 2,06 mm-Sieb passieren können.

11. Verfahren nach einem der Ansprüche 1 bis 9, worin das Metall dadurch aus der Dispersion entfernt wird, dass man die Dispersion magnetisch in eine magnetische Fraktion und eine weniger magnetische Fraktion trennt, die durch ein 2,06 mm-Sieb passierenden Teilchen mindestens grösstenteils unter Bildung einer Fraktion kleinerer Teilchen aus dieser weniger magnetischen Fraktion entfernt und diese Fraktion kleinerer Teilchen magnetisch in eine magnetische Fraktion und eine zweite weniger magnetische Fraktion trennt, wobei dieser zweite weniger magnetische Anteil etwa 1 Gew.-% Metall oder weniger enthält.

12. Verfahren nach einem der Ansprüche 1 bis 11, worin diese Stücke metallisierten Kunststoffmaterials vermahlen und zur Entfernung magnetischen Materials daraus vor dem Abkühlen einem magnetischen Feld ausgesetzt werden.

13. Verfahren nach einem der Ansprüche 1 bis 12, worin mindestens etwa 50 Gew.-% dieser Stücke metallisierten Kunststoffmaterials vor dem Aufprallen durch ein Sieb mit 5 mm-Oeffnungen passieren können.

## Revendications

1. Procédé de récupération d'une matière plastique à partir de matière plastique de rebut contenant du métal, le procédé consistant à exposer les morceaux de matière plastique à une température suffisamment basse pour rendre la matière plastique fragile, à soumettre les morceaux refroidis à des chocs afin de les briser pour former une dispersion de plastique et de métal, et à éliminer de la dispersion une quantité de métal suffisante pour fournir une matière plastique réutilisable, l'élimination consistant à soumettre au moins une partie de la dispersion à une séparation magnétique, caractérisé en ce que la matière plastique de rebut a un revêtement de métal adhérant de manière tenace, en ce que la matière de rebut est refroidie à une température inférieure à −87°C, cette dernière température étant suffisamment inférieure à la température de transition vitreuse pour maintenir la matière plastique fragile pendant le broyage et provoquer la séparation du revêtement de métal de la matière plastique par retrait différentiel, et en ce qu'avant la séparation magnétique, la dispersion de plastique et de métal est classée selon la taille des particules et seules les particules les plus petites de la dispersion en poudre sont soumises à une séparation magnétique.

2. Procédé suivant la revendication 1, caractérisé en ce que les particules les plus grandes de la dispersion en poudre sont retraitées pour réduire encore leurs dimensions.

3. Procédé suivant l'une quelconque des revendications 1 ou 2, caractérisé en ce que l'intensité de la séparation magnétique est suffisamment élevée pour fournir une fraction non magnétique ne comprenant pas plus de 1% en poids de métal.

4. Procédé suivant l'une quelconque des revendications 2 ou 3, caractérisé en ce que ce revêtement de métal comprend une couche de métal non ferromagnétique.

5. Procédé suivant l'une quelconque des revendications 1 à 4, caractérisé en ce que la matière sont le métal a été éliminé est fondue et la matière fondue est filtrée à travers un ou plusieurs tamis.

6. Procédé suivant l'une quelconque des revendications 1 à 4, caractérisé en ce que la

**0 014 289**

matière plastique comprend une matière thermoplastique.

7. Procédé suivant la revendication 6, caractérisé en ce que cette matière plastique métallisée comprend de l'ABS chromé.

8. Procédé suivant l'une quelconque des revendications 1 à 7, caractérisé en ce que les morceaux refroidis sont projetés contre des tiges de projection rectilignes dans un broyeur à chocs rotatif.

9. Procédé suivant l'une quelconque des revendications 1 à 8, caractérisé en ce qu'avant le choc, au moins environ 50% en poids des ces morceaux de matière plastique métallisée peuvent traverser un tamis d'une ouverture de 10 mm et au moins environ 80% en poids de ces morceaux peuvent traverser une ouverture de 15 millimètres.

10. Procédé suivant l'une quelconque des revendications 1 à 9, caractérisé en ce que la matière plastique est pulvérisée de telle sorte qu'au moins environ 80% en poids puissent traverser un tamis de 2,4 mm (8 mesh).

11. Procédé suivant l'une quelconque des revendications 1 à 9, caractérisé en ce que le métal est éliminé de la dispersion en séparant magnétiquement la dispersion en une fraction magnétique et une fraction moins magnétique, en éliminant de cette fraction moins magnétique au moins la plupart des particules qui traversent un tamis de 0,8 mm (10 mesh) pour former une fraction de particules plus petites; et en séparant magnétiquement cette fraction de particules plus petites en une fraction magnétique et une seconde fraction moins magnétique, cette seconde portion moins magnétique contenant environ 1% en poids de métal ou moins.

12. Procédé suivant l'une quelconque des revendications 1 à 11, caractérisé en ce que ces morceaux de matière plastique métallisée sont broyés et exposés à un champ magnétique pour en éliminer la matière magnétique avant le refroidissement.

13. Procédé suivant l'une quelconque des revendications 1 à 12, caractérisé en ce qu'au moins environ 50% en poids de ces morceaux de matière plastique métallisée peuvent traverser un tamis ayant une ouverture de 5 mm avant qu'ils soient soumis aux chocs.

FIG. 1.

0014289

FIG. 2.

FIG. 3.

2

FIG.4.

FIG.5.

0014289

FIG. 6.